Europäisches Patentamt

(19) European Patent Office

Office européen des brevets

(11) Publication number: **0 065 699**
**B1**

(12) **EUROPEAN PATENT SPECIFICATION**

(45) Date of publication of patent specification: **11.03.87**

(21) Application number: **82104086.2**

(22) Date of filing: **11.05.82**

(51) Int. Cl.⁴: **H 01 S 3/03,** H 01 S 3/097,
H 01 S 3/10

(54) **A silent discharge-type laser device.**

(30) Priority: **11.05.81 JP 70558/81**

(43) Date of publication of application:
**01.12.82 Bulletin 82/48**

(45) Publication of the grant of the patent:
**11.03.87 Bulletin 87/11**

(84) Designated Contracting States:
**DE FR GB**

(56) References cited:
**US-A-4 180 784**
**US-A-4 247 829**
**US-A-4 329 662**

**PATENT ABSTRACTS OF JAPAN, vol. 4, no.
181(E-37)(663), 13 December 1980**

**PATENT ABSTRACTS OF JAPAN, vol. 5, no. 23
(E-45)(695) 12 February 1981**

(73) Proprietor: **MITSUBISHI DENKI KABUSHIKI
KAISHA
2-3, Marunouchi 2-chome Chiyoda-ku
Tokyo 100 (JP)**

(72) Inventor: **Yagi, Shigenori
2-1, 59-101, Shinryodai Tarumi-ku
Kobe Hyogo Prefecture (JP)**
Inventor: **Ogawa, Shuji
4-4-105, Ryodo-cho
Nishinomiya Hyogo Prefecture (JP)**
Inventor: **Kuzumoto, Masaki
c/o Hakusan Dormitory 4-22-1, Tomatsu-cho
Amagasaki Hyogo Prefecture (JP)**
Inventor: **Tabata, Norikazu
3-1, C41-201, Shinsenri Kita-machi
Toyonaka Osaka (JP)**

(74) Representative: **Kern, Ralf M., Dipl.-Ing. et al
Kern, Lang, Barg & Partner Patent- und
Rechtsanwältsbüro Postfach 14 03 29
D-8000 München 5 (DE)**

## Description

The present invention relates to a silent discharge-type laser device, and more specifically to a device capable of controlling the intensity of the laser beam with respect to the demands which are defined by the actual state of processing a work piece.

A conventional device of the above type is described in the JP—A—55 124 290 to which US—A—4 329 662 corresponds. These documents disclose a silent discharge laser device for processing work pieces of different kind. Accordingly, in this laser device a high-frequency voltage is applied across electrodes to establish silent discharge which excites the laser beam.

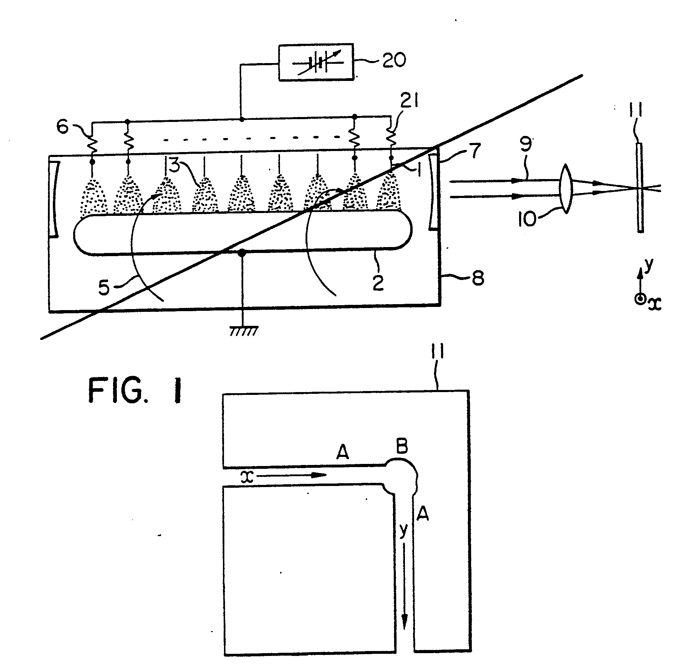

During processing work pieces by the laser e.g. cutting a defined shape in a metal plate the cutting speed of the laser is not constant, specifically if there are lines to be cut which are complicated in form and shape. In other words, if the cutting direction must be changed as it is shown in Figure 1 indicated by x and y the cutting speed cannot be kept constant over the entire cutting line. This causes increased influence of heat energy for example at the junction point B of two straightly cut portions A with the final effect that spot B absorbed too much energy which enlarges the cutwide. Particularly in case of complicated cutting forms it is not possible to realize an outline of a cut work piece with a high degree of accuracy.

For the above reasons the silent discharge laser in the above-mentioned patent forms an intermittent wave (pulse wave), specifically in the way that the output level is turned on or turned off. Accordingly, the voltage applied to the electrode is completely periodically interrupted applied as a rectangular wave in short time intervals to obtain pulse oscillation output. With this prior laser device only constant processing speeds can be realized with success without the disadvantage of a bad work piece quality. However, where different processing speeds become necessary, also this prior device is disadvantageous.

It is therefore object of the present invention to realize a silent discharge laser device which allows processing a work piece using different cutting speeds, so that the quality of the work piece is not influenced by the change in the cutting speed.

This object is solved by forming a silent discharge-type laser device which is characterized by a control device which is connected to a high frequency power source and which supplies signals that work to adapt the amplitude of the output voltage and/or the frequency of said high-frequency power source to the actual processing conditions.

Depending upon the requirement for using the laser beam, the output can be controlled at high speeds, presenting favourable effects.

Preferred ways of carrying out the invention are described in detail below with reference to drawings, in which:—

Fig. 1 is a front view showing an example of a workpiece processed by using a prior laser device;

Fig. 2 is a schematic view showing the setup according to an embodiment of the present invention;

Fig. 3 is a diagram showing part of the electric circuits according to the embodiment of the present invention;

Fig. 4 is a diagram illustrating the operation principle of the present invention and showing the relation between the discharge energy of one cycle and the crest value of voltage;

Fig. 5 is a diagram which illustrates the relation between the laser output and the discharged power;

Fig. 6 illustrates the operation of the embodiment of the present invention, with Fig. 6(a) showing a signal waveform, Fig. 6(b) showing waveforms of a high-frequency voltage which is applied, Fig. 6(c) showing the amount of discharge energy per cycle of the high-frequency voltage which is applied, and the Fig. 6(d) showing the characteristics of laser output;

Fig. 7 is a front view showing an example of a workpiece processed with the device according to the present invention;

Fig. 8 is a diagram showing another embodiment of the present invention, in which Fig. 8(a) illustrates signal waveforms, and Fig. 8(b) illustrates waveforms of laser output; and

Fig. 9 is a front view showing an example of a workpiece processed with the present device.

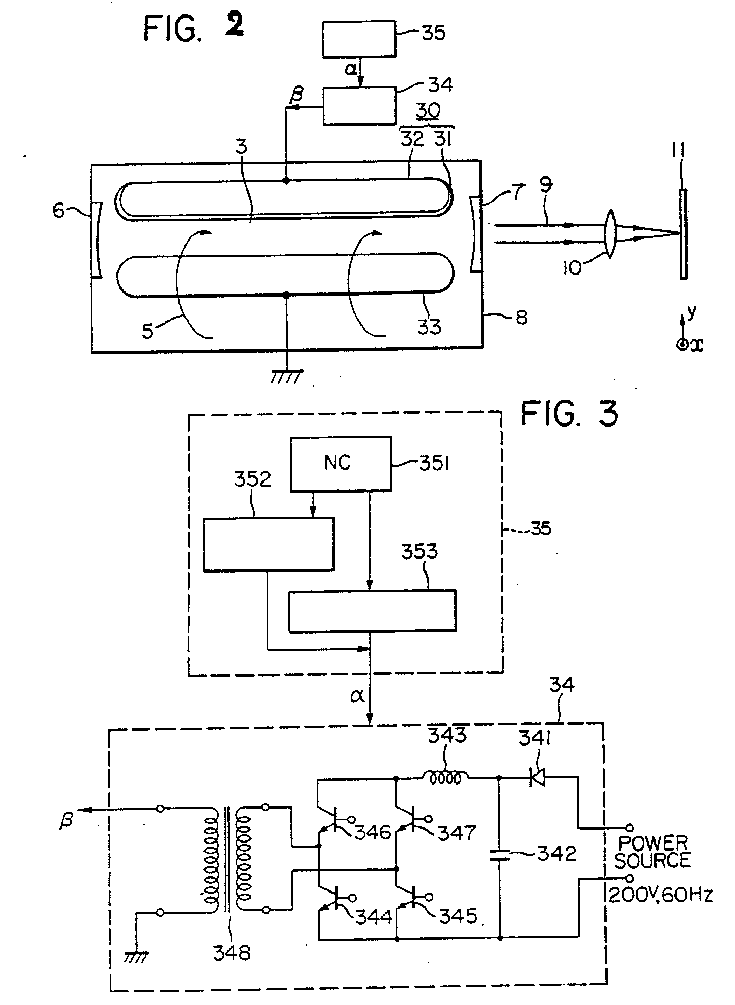

The embodiment of the invention shown in Fig. 2 includes a dielectric electrode 30 which consists of a metal plate 32 the discharge surface of which is coated with a dielectric material 31, a metal electrode 33, a high-frequency power supply 34 and a control device 35 which controls the output voltage of the high-frequency power supply 34 responsive to instruction signals which have been stored beforehand in relation to the processing positions.

The setup of the high-frequency power supply 34 and of the control device 35 will be explained below in conjunction with Fig. 3. The high-frequency power supply 34 is connected to an a-c power source of 200 volts, 60 Hz. The alternating current is converted into a direct current through a diode 341, a capacitor 342 and a reactor 343, and the frequency is increased by a multiplicity of transistors 344, 345, 346, 347. The voltage is then boosted by a high-frequency transformer 348 to produce an output β.

On the other hand, the control device 35 has a numeric control device 351 which controls the relative positions of the workpiece 11 and of the laser beam 9, and which controls the moving speeds. Output signals of the numeric control device 351 are supplied to a frequency-control circuit 352 and/or a voltage-control circuit 353, to control the frequency and/or the voltage of the transistor-controlled signals. Output signals a of the control device 35 are fed to the transistors 344, 345, 346 and 347. The frequency-control circuit 352 changes the turn-on and -off speeds of the transistors 344, 345, 346 and 347, thereby to change the frequency.

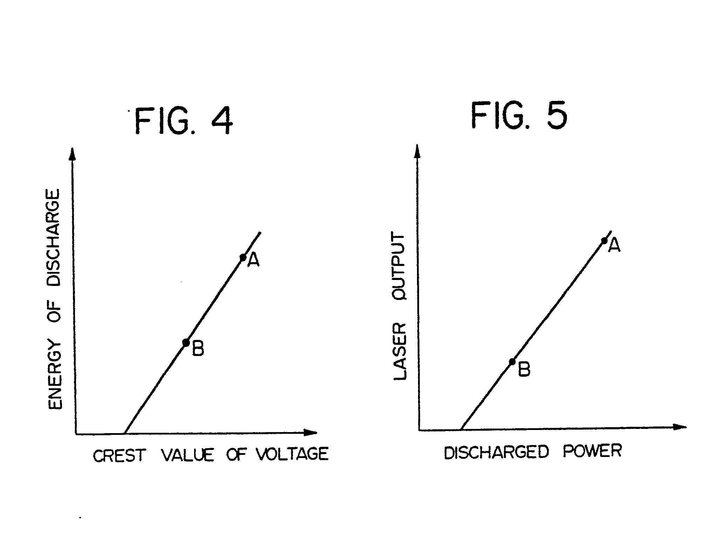

Silent discharge is established in the discharge space 3. In the silent discharge which takes place between the dielectric electrode 30 and the metal electrode 33, there exists a nearly linear relation between a crest value of the voltage applied across the electrodes and the discharge energy of one cycle, as shown in Fig. 4. The energy of discharge is intermittently injected for each cycle, so that the discharge is maintained stably. Therefore, the discharged power depends linearly upon the crest value of voltage, and varies in proportion to the frequency of the power supply.

The relation between the discharged power and the laser output is shown in Fig. 5. That is, the laser output depends linearly upon the discharged power.

The present invention as described below in detail was accomplished on the basis of these facts.

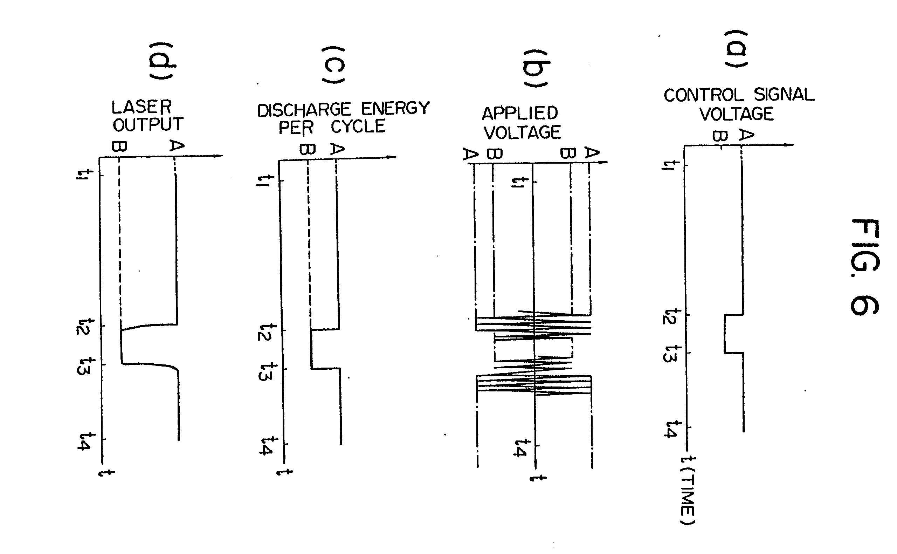

Fig. 6 illustrates an embodiment of the present invention, in which the Fig. 6(a) shows the waveform of a control signal $\alpha$ fed to the high-frequency power supply 34, and illustrates the case when the same processing as shown in Fig. 2 is to be carried out. Namely, the metal plate 11 to be processed proceeds in the direction x from time $t_1$ to a time $t_2$, changes its direction by 90° from the time $t_2$ to a time $t_3$, and proceeds in the direction y from the time $t_3$ to a time $t_4$, to finish the processing.

Fig. 6(b) illustrates the change in the high-frequency voltage which is applied. The applied voltage decreases over a period from time $t_2$ to time $t_3$, maintaining a form that is amplitude-modulated by the signal $\alpha$ the voltage of which is controlled by the voltage-control circuit 353. Fig. 6(c) shows the change in the discharge energy per cycle of the high-frequency voltage which is applied. The discharge energy decreases in response to the reduction in the applied voltage from time $t_2$ to time $t_3$. Fig. 6(d) shows the change in the laser output. Namely, the laser output decreases over a period of from time $t_2$ to time $t_3$.

In the silent discharge, the rise or break of the laser output is as short as about 0,05 msec., and it is possible to obtain laser outputs which follow the waveform of the signal voltage of Fig. 6(a).

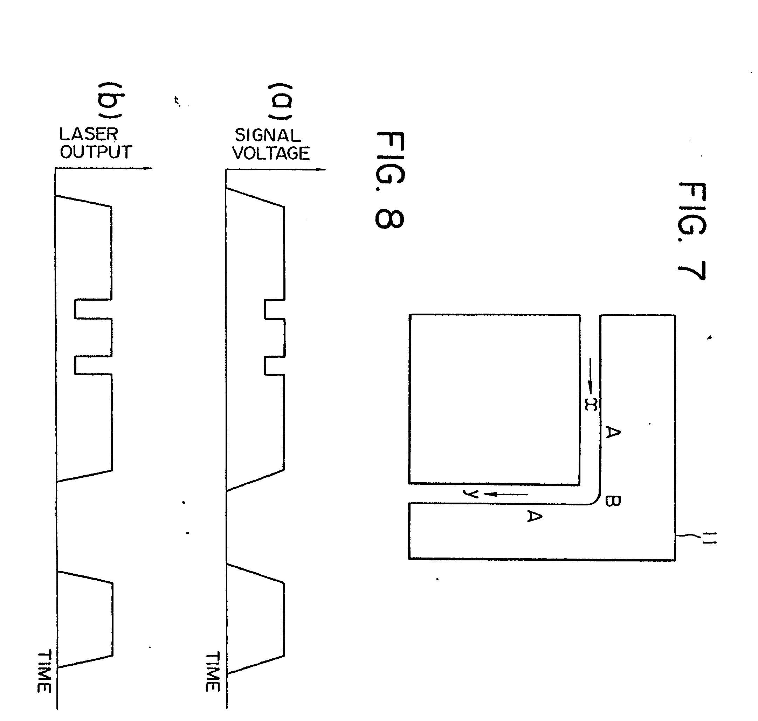

The thus processed metal plate 11 has a uniform groove width both in the straight portion A and in the folded portion B, as shown in Fig. 7.

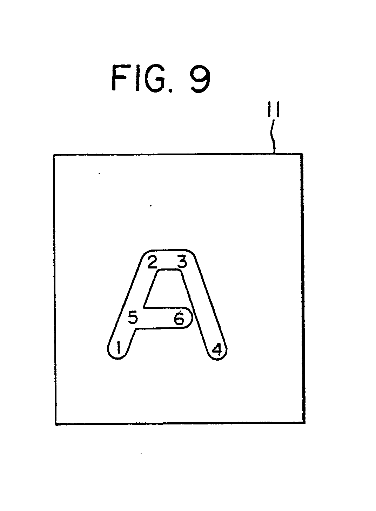

There may be a lot of signal voltages and laser outputs that are to be followed in the practical field of applications. With the device of the present invention, it is possible to obtain signal voltages (a) and the corresponding laser outputs (b) as shown in Fig. 8. Therefore, a pattern shown, for example, in Fig. 9 can be formed at high speeds, being controlled in a programmed manner.

In the above-described embodiment, the voltage applied to the electrode is amplitude-modulated in response to the signal voltage. In the silent discharge, however, the electric power also changes in proportion to the frequency. Therefore, the same effect can also be obtained by modulating the frequency by the frequency-controlled circuit 352. It is further allowable to employ both the amplitude modulation and the frequency modulation.

**Claims**

1. A silent discharge-type laser device for processing workpieces comprising a set of opposing electrodes (30, 33), wherein at least either one (30) of them being an electrode covered with a dielectric layer, a high frequency power source (34) which is connected to said electrodes (30, 33) and which applies a high-frequency voltage across said electrodes (30, 33), so that silent discharge takes place across the electrodes (30, 33) and that a laser beam (9) is produced; characterized by a control device (35) which is connected to said high-frequency power source (34) and which supplies signals ($\alpha$) that work to adapt the amplitude of the output voltage ($\beta$) and/or the frequency of said high-frequency power source (34) to the actual processing conditions.

2. A silent discharge-type laser device according to claim 1, characterized in that the control device (35) has at least either one of a frequency-control circuit (352) or a voltage-control circuit (353) to increase or decrease the output voltage and/or the frequency produced by the high-frequency power source (34).

3. A silent discharge-type laser device according to claim 1, characterized in that the control device (35) stores control signals of output voltage related to processing positions of the workpiece (11).

4. A silent discharge-type laser device according to claim 1, characterized in that the control device (35) is further provided with a numeric control device (351).

5. A silent discharge-type laser device according to the claims 2 and 4, characterized in that the numeric control device (351) supplies signals to at least either one of the frequency-control circuit (352) or the voltage-control circuit (353), to increase or decrease the output voltage and/or the frequency of the high-frequency source (34).

6. A silent discharge-type laser device according to claim 1, characterized in that the control device (35) stores control signals for reducing the output of the high-frequency power supply (34).

7. A silent discharge-type laser device according to claim 1, characterized in that the high-frequency power source (34) has a rectifier circuit (341—343) connected to the power source, and a frequency-increasing circuit (344—347) connected to the latter stage of said rectifier circuit (341—343), and output signals of the control circuit (35) are fed to the frequency-increasing circuit (344—347).

8. A silent discharge-type laser device according to claim 7, characterized in that the high-frequency power source (34) has a high-frequency transformer (348) which is connected to the latter stage of the frequency-increasing circuit (344—347).

## Revendications

1. Dispositif à laser du type à décharge silencieuse pour le traitement de pièces, comprenant un groupe d'électrodes opposées (30, 33), où au moins l'une (30) d'entre elles est une électrode couverte d'une couche diélectrique, une source de courant à haute fréquence (34) qui est connectée auxdites électrodes (30, 33) et qui applique une tension à haute fréquence entre lesdites électrodes (30, 33) de manière qu'une décharge silencieuse ait lieu entre les électrodes (30, 33) et qu'un faisceau laser (9) soit produit; caractérisé par un dispositif de commande (35) qui est connecté à ladite source de courant haute fréquence (34) et qui fournit des signaux (α) qui servent à adapter l'amplitude de la tension de sortie (β) et/ou la fréquence de ladite source de courant à haute fréquence (34) aux conditions réelles de traitement.

2. Dispositif à laser du type à décharge silencieuse selon la revendication 1, caractérisé en ce que le dispositif de commande (35) a au moins soit un dispositif de contrôle de fréquence (352) ou un circuit de contrôle de tension (353) pour augmenter ou diminuer la tension de sortie et/ou la fréquence produites par la source de courant haute fréquence (34).

3. Dispositif à laser du type à décharge silencieuse selon la revendication 1, caractérisé en ce que le dispositif de commande (35) stocke des signaux de commande de tension de sortie en rapport avec les positions de traitement de la pièce (11).

4. Dispositif à laser du type à décharge silencieuse selon la revendication 1, caractérisé en ce que le dispositif de commande (35) est de plus pourvu d'un dispositif de commande numérique (351).

5. Dispositif à laser du type à décharge silencieuse selon les revendications 2 et 4, caractérisé en ce que le dispositif de commande numérique (351) fournit des signaux à au moins l'un du circuit de contrôle de fréquence (352) ou du circuit de contrôle de tension (353), pour augmenter ou diminuer la tension de sortie et/ou la fréquence de la source haute fréquence (34).

6. Dispositif à laser du type à décharge silencieuse selon la revendication 1, caractérisé en ce que le dispositif de commande (35) stocke des signaux de commande pour réduire la sortie de la source d'alimentation en courant haute fréquence (34).

7. Dispositif à laser du type à décharge silencieuse selon la revendication 1, caractérisé en ce que la source de courant haute fréquence (34) a un circuit redresseur (341—343) connecté à la source de courant, et un circuit d'augmentation de fréquence (344—347) connecté au dernier étage dudit circuit redresseur (341—343), et des signaux à la sortie du circuit de commande (35) sont appliqués au circuit d'augmentation de fréquence (344—347).

8. Dispositif à laser du type à décharge silencieuse selon la revendication 7, caractérisé en ce que la source de courant haute fréquence (34) a un transformateur haute fréquence (348) qui est connecté au dernier étage du circuit d'augmentation de fréquence (344—347).

## Patentansprüche

1. Laservorrichtung mit geräuschfreier Entladung zur Bearbeitung von Werkstücken mit einem Satz von sich gegenüberliegenden Elektroden (30, 33), wobei mindestens eine (30) der Elektroden mit einer elektrischen Schicht überzogen ist, mit einer Hochfrequenz-Energiequelle (34), welche mit den Elektroden (30, 33) verbunden ist und eine hochfrequente Spannung an die Elektroden (30, 33) anlegt, so daß eine geräuschfreie Entladung über die Elektroden (30, 33) stattfindet und ein Laserstrahl (9) gebildet wird, gekennzeichnet durch, eine Steuereinheit (35), welche mit der Hochfrequenz-Energiequelle (34) verbunden ist und Signale (α) liefert, welche die Amplitude der Ausgangsspannung (β) und/oder die Frequenz der Hochfrequenz-Energiequelle (34) den gerade vorherrschenden Arbeitsbedingungen anpaßt.

2. Laservorrichtung mit geräuschfreier Entladung nach Anspruch 1, dadurch gekennzeichnet, daß die Steuereinheit (35) mindestens eine Frequenzsteuerschaltung (352) oder Spannungssteuerschaltung (353) aufweist, um die Ausgangsspannung und/oder die durch die Hochfrequenz-Energiequelle (34) erzeugte Frequenz zu erhöhen oder zu erniedrigen.

3. Laservorrichtung zur geräuschfreien Entladung nach Anspruch 1, dadurch gekennzeichnet, daß die Steuereinheit (35) Steuersignale der Ausgangsspannung, welche sich auf Arbeitspositionen am Werkstück (11) beziehen, speichert.

4. Laservorrichtung zur geräuschfreien Entladung nach Anspruch 1, dadurch gekennzeichnet, daß die Steuereinheit (35) zusätzlich mit einer numerischen Steuereinrichtung (351) ausgestattet ist.

5. Laservorrichtung zur geräuschfreien Entladung nach den Ansprüchen 2 und 4, dadurch gekennzeichnet, daß die numerische Steuereinrichtung (351) Signale mindestens entweder dem Frequenzsteuer-Schaltkreis (352) oder dem Spannungssteuer-Schaltkreis (353) zuführt, um die Ausgangsspannung und/oder die Frequenz der Hochfrequenz-Energiequelle (34) zu erhöhen oder zu erniedrigen.

6. Laservorrichtung zur geräuschfreien Entladung nach Anspruch 1, dadurch gekennzeichnet, daß die Steuereinheit (35) Steuersignale zur Erniedrigung des Ausgangs der Hochfrequenz-Energiequelle (34) speichert.

7. Laservorrichtung nach Anspruch 1, dadurch gekennzeichnet, daß die Hochfrequenz-Energiequelle (34) eine Gleichrichterschaltung (341—343), die mit der Energiequelle verbunden ist, sowie eine Frequenzerhöhungsschaltung (344—347), die mit der letzteren Stufe der Gleichrichterschaltung (341—343) verbunden ist, umfasst, und daß Ausgangssignale der Steuereinheit (35) der Frequenzerhöhungsschaltung (344—347) zugeführt werden.

8. Laservorrichtung zur geräuschfreien Entladung nach Anspruch 7, dadurch gekennzeichnet, daß die Hochfrequenz-Energiequelle (34) einen Hochfrequenz-Transformator (348) umfasst, welcher mit der letzteren Stufe der Frequenzerhöhungsschaltung (344—347) verbunden ist.

FIG. I

# FIG. 2

# FIG. 3

# FIG. 4

## FIG. 5

# FIG. 6

(a) CONTROL SIGNAL VOLTAGE

A
B

t₁  t₂ t₃  t₄  t(TIME)

(b) APPLIED VOLTAGE

A
B

t₁  t₄  t

B
A

(c) DISCHARGE ENERGY PER CYCLE

A
B

t₁  t₂ t₃  t₄  t

(d) LASER OUTPUT

A
B

t₁  t₂ t₃  t₄  t

# FIG. 7

# FIG. 8

# FIG. 9